# EUROPEAN PATENT APPLICATION

(11) **EP 4 513 836 A1**
(43) Date of publication of application: **26.02.2025**
(21) Application number: 23806677.3
(22) Date of filing: 19.04.2023
(51) Int. Cl.: H04L 25/00

(54) **BASEBAND PROCESSING METHOD AND APPARATUS**

(30) Priority: 18.05.2022 CN 202210542972
(71) Applicant: Huawei Technologies Co., Ltd., Shenzhen, Guangdong 518129 (CN)
(72) Inventor: WU, Suwen, Shenzhen, Guangdong 518129 (CN); ZHANG, Jian, Shenzhen, Guangdong 518129 (CN); WANG, Haiyang, Shenzhen, Guangdong 518129 (CN)
(74) Representative: Isarpatent
(86) International application number: PCT/CN2023/089289
(87) International publication number: WO 2023/221724

(57) **Abstract**

This application provides a baseband processing method and apparatus. The method includes: A first apparatus receives first function information and first power consumption information from a radio frequency apparatus, where the first function information indicates a first baseband processing function supported by the radio frequency apparatus, and the first power consumption information indicates power consumption of the first baseband processing function. The first apparatus sends first indication information to the radio frequency apparatus, where the first indication information indicates a first target baseband processing function, the first indication information is determined based on the first function information, the first power consumption information, second function information, and second power consumption information, the second function information indicates a second baseband processing function supported by the first control apparatus, and the second power consumption information indicates power consumption of the second baseband processing function. The first target baseband processing function is the first M required baseband processing functions or the last K required baseband processing functions in N required baseband processing functions, and the required baseband processing functions are baseband processing functions that are sequentially performed during processing of a baseband signal. In this way, system power consumption can be reduced.

## Description

This application claims priority to Chinese Patent Application No. 202210542972.8, filed with the China National Intellectual Property Administration on May 18, 2022 and entitled "BASEBAND PROCESSING METHOD AND APPARATUS", which is incorporated herein by reference in its entirety.

### TECHNICAL FIELD

This application relates to the field of communication technologies, and more specifically, to a baseband processing method and apparatus.

### BACKGROUND

During processing of a baseband signal, a baseband unit and a radio unit in an access network device may sequentially perform a plurality of baseband processing functions based on a preset allocation manner, to process the baseband signal. In this case, a baseband processing function performed by the baseband unit and a baseband processing function performed by the radio unit are fixed. However, for example, because the baseband unit and the radio unit have different production techniques, hardware structures, or running environments, overall system power consumption caused in different allocation manners may be different during processing of the baseband signal, and the preset allocation manner may be a manner with high power consumption in the plurality of allocation manners. Therefore, there is an urgent need for a baseband processing method and apparatus to reduce system power consumption.

### SUMMARY

This application provides a baseband processing method and apparatus, to reduce system power consumption.

According to a first aspect, a baseband processing method is provided. The method may be performed by a first apparatus or a chip in the first apparatus. The method includes: The first apparatus receives first function information and first power consumption information from a radio frequency apparatus, where the first function information indicates at least one first baseband processing function supported by the radio frequency apparatus, and the first power consumption information indicates power consumption of implementing each of the at least one first baseband processing function by the radio frequency apparatus. The first apparatus sends first indication information to the radio frequency apparatus, where the first indication information indicates a first target baseband processing function, the first target baseband processing function includes one or more of the at least one first baseband processing function, the first indication information is determined based on the first function information, the first power consumption information, second function information, and second power consumption information, the second function information indicates at least one second baseband processing function supported by a first control apparatus, and the second power consumption information indicates power consumption of implementing each of the at least one second baseband processing function by the first control apparatus. The first target baseband processing function is the first M required baseband processing functions or the last K required baseband processing functions in N required baseband processing functions, N, M, and K are positive integers, M ≤ N, K ≤ N, and the N required baseband processing functions are baseband processing functions that are sequentially performed by the radio frequency apparatus and the first control apparatus during processing of a baseband signal.

Therefore, in this application, the radio frequency apparatus may report, to the first apparatus, a baseband processing function supported by the radio frequency apparatus and power consumption corresponding to the baseband processing function. The first apparatus may comprehensively consider a capability and power consumption of each apparatus as required, and may select a manner with low system power consumption to indicate the radio frequency apparatus to perform the baseband processing function, to reduce system power consumption.

With reference to the first aspect, in some implementations of the first aspect, the first function information includes bandwidth information, the bandwidth information indicates a bandwidth supported by the radio frequency apparatus, and the bandwidth is greater than or equal to a first value.

Therefore, in this application, the radio frequency apparatus may further report a bandwidth capability to the first apparatus, so that the first apparatus can determine that the radio frequency apparatus can meet a bandwidth requirement, to improve reliability of system baseband processing.

With reference to the first aspect, in some implementations of the first aspect, the method further includes: The first apparatus receives the second function information and the second power consumption information from the first control apparatus. The first apparatus sends second indication information to the first control apparatus, where the second indication information indicates a second target baseband processing function, the second target baseband processing function includes one or more of the at least one second baseband processing function, and the second target baseband processing function is a baseband processing function other than the first target baseband processing function in the N required baseband processing functions.

Therefore, in this application, the first apparatus and the first control apparatus may be deployed in one apparatus, and perform information transmission through an internal communication interface. Alternatively, the first apparatus and the first control apparatus may be separately deployed in different apparatuses, and perform information transmission through an interface between the apparatuses. This can improve system flexibility.

With reference to the first aspect, in some implementations of the first aspect, before that the first apparatus sends the first indication information to the radio frequency apparatus, the method further includes: The first apparatus receives third function information and third power consumption information from a second control apparatus, where the third function information indicates at least one third baseband processing function supported by the second control apparatus, the third power consumption information indicates power consumption of implementing each of the at least one third baseband processing function by the second control apparatus, and the first indication information is determined based on the first function information, the first power consumption information, the second function information, the second power consumption information, the third function information, and the third power consumption information.

Therefore, in this application, the first apparatus may be connected to a plurality of control apparatuses, and the first apparatus may select a first control apparatus with lower power consumption from the plurality of control apparatuses, to perform baseband processing, so that system power consumption can be further reduced.

With reference to the first aspect, in some implementations of the first aspect, the first function information includes first working mode information, the first working mode information indicates at least one first working mode supported by the radio frequency apparatus, the first working mode is a working mode used when the radio frequency apparatus performs one or more of the at least one baseband processing function, the first indication information further indicates a first target working mode, and the first target working mode is for performing the first target baseband processing function.

With reference to the first aspect, in some implementations of the first aspect, the second function information includes second working mode information, the second working mode information indicates at least one second working mode supported by the first control apparatus, the second working mode is a working mode used when the first control apparatus performs one or more of the at least one second baseband processing function, the second indication information further indicates a second target working mode, and the second target working mode is for performing the second target baseband processing function.

Therefore, in this application, the first apparatus may learn of, based on function information, working modes supported by the radio frequency apparatus and the control apparatus, so that baseband processing functions can be allocated based on the working modes, to improve system flexibility.

With reference to the first aspect, in some implementations of the first aspect, the first function information further includes at least one of the following information: a quantity of users that is supported when the radio frequency apparatus performs each first baseband processing function, a quantity of data streams or service streams that is supported when the radio frequency apparatus performs each first baseband processing function, or a quantity of resource blocks that is supported when the radio frequency apparatus performs each first baseband processing function.

With reference to the first aspect, in some implementations of the first aspect, the second function information further includes at least one of the following information: a quantity of users that is supported when the first control apparatus performs each second baseband processing function, a quantity of data streams or service streams that is supported when the first control apparatus performs each second baseband processing function, or a quantity of resource blocks that is supported when the first control apparatus performs each second baseband processing function.

Therefore, in this application, the function information may further include processing capability information of each baseband processing function, and the first apparatus allocates the baseband processing function based on the function information, so that the baseband processing function allocated to the radio frequency apparatus is a baseband processing function within a capability range of the radio frequency apparatus, to further improve reliability of system baseband processing.

With reference to the first aspect, in some implementations of the first aspect, the method may alternatively be performed by the radio frequency apparatus or a chip in the radio frequency apparatus. The method includes: The radio frequency apparatus sends first function information and first power consumption information to the first apparatus. The radio frequency apparatus receives first indication information from the first apparatus.

With reference to the first aspect, in some implementations of the first aspect, the method may alternatively be performed by the first control apparatus or a chip in the first control apparatus. The method further includes: The first control apparatus sends second function information and second power consumption information to the first apparatus. The first control apparatus receives second indication information from the first apparatus.

With reference to the first aspect, in some implementations of the first aspect, the method may alternatively be performed by the second control apparatus or a chip in the second control apparatus. The method further includes: The second control apparatus sends third function information and third power consumption information to the first apparatus.

According to a second aspect, a baseband processing method is provided. The method may be performed by a radio frequency apparatus or a chip in the radio frequency apparatus. The method includes: The radio frequency apparatus sends first function information and first power consumption information to a first apparatus, where the first function information indicates at least one first baseband processing function supported by the radio frequency apparatus, and the first power consumption information indicates power consumption of implementing each of the at least one first baseband processing function by the radio frequency apparatus. The radio frequency apparatus receives first indication information from the first apparatus, where the first indication information indicates a first target baseband processing function, the first target baseband processing function includes one or more of the at least one first baseband processing function, the first indication information is determined based on the first function information, the first power consumption information, second function information, and second power consumption information, the second function information indicates at least one second baseband processing function supported by a first control apparatus, and the second power consumption information indicates power consumption of implementing each of the at least one second baseband processing function by the first control apparatus. The first target baseband processing function is the first M required baseband processing functions or the last K required baseband processing functions in N required baseband processing functions, N, M, and K are positive integers, M ≤ N, K ≤ N, and the N required baseband processing functions are baseband processing functions that are sequentially performed by the radio frequency apparatus and the first control apparatus during processing of a baseband signal.

Therefore, in this application, the radio frequency apparatus may report, to the first apparatus, a baseband processing function supported by the radio frequency apparatus and power consumption corresponding to the baseband processing function. The first apparatus may comprehensively consider a capability and power consumption of each apparatus as required, and may select a manner with low system power consumption to indicate the radio frequency apparatus to indicate to perform the baseband processing function, to reduce system power consumption.

With reference to the second aspect, in some implementations of the second aspect, the first function information includes bandwidth information, the bandwidth information indicates a bandwidth supported by the radio frequency apparatus, and the bandwidth is greater than or equal to a first value.

With reference to the second aspect, in some implementations of the second aspect, the first function information includes first working mode information, the first working mode information indicates at least one first working mode supported by the radio frequency apparatus, the first working mode is a working mode used when the radio frequency apparatus performs one or more of the at least one baseband processing function, the first indication information further indicates a first target working mode, and the first target working mode is for performing the first target baseband processing function.

With reference to the second aspect, in some implementations of the second aspect, the first function information further includes at least one of the following information: a quantity of users that is supported when the radio frequency apparatus performs each first baseband processing function, a quantity of data streams or service streams that is supported when the radio frequency apparatus performs each first baseband processing function, or a quantity of resource blocks that is supported when the radio frequency apparatus performs each first baseband processing function.

According to a third aspect, a baseband processing apparatus is provided. The apparatus includes a transceiver unit and a processing unit. The transceiver unit is configured to receive first function information and first power consumption information from a radio frequency apparatus, where the first function information indicates at least one first baseband processing function supported by the radio frequency apparatus, and the first power consumption information indicates power consumption of implementing each of the at least one first baseband processing function by the radio frequency apparatus. The processing unit is configured to generate first indication information, where the first indication information indicates a first target baseband processing function, the first target baseband processing function includes one or more of the at least one first baseband processing function, the first indication information is determined based on the first function information, the first power consumption information, second function information, and second power consumption information, the second function information indicates at least one second baseband processing function supported by a first control apparatus, and the second power consumption information indicates power consumption of implementing each of the at least one second baseband processing function by the first control apparatus. The first target baseband processing function is the first M required baseband processing functions or the last K required baseband processing functions in N required baseband processing functions, N, M, and K are positive integers, M ≤ N, K ≤ N, and the N required baseband processing functions are baseband processing functions that are sequentially performed by the radio frequency apparatus and the first control apparatus during processing of a baseband signal. The transceiver unit is further configured to send the first indication information to the radio frequency apparatus.

Therefore, in this application, the radio frequency apparatus may report, to the first apparatus, a baseband processing function supported by the radio frequency apparatus and power consumption corresponding to the baseband processing function. The first apparatus may comprehensively consider a capability and power consumption of each apparatus as required, and may select a manner with low system power consumption to indicate the radio frequency apparatus to indicate to perform the baseband processing function, to reduce system power consumption.

With reference to the third aspect, in some implementations of the third aspect, the first function information includes bandwidth information, the bandwidth information indicates a bandwidth supported by the radio frequency apparatus, and the bandwidth is greater than or equal to a first value.

With reference to the third aspect, in some implementations of the third aspect, the transceiver unit is further configured to receive the second function information and the second power consumption information from the first control apparatus. The transceiver unit is further configured to send second indication information to the first control apparatus, where the second indication information indicates a second target baseband processing function, the second target baseband processing function includes one or more of the at least one second baseband processing function, and the second target baseband processing function is a baseband processing function other than the first target baseband processing function in the N required baseband processing functions.

With reference to the third aspect, in some implementations of the third aspect, before the transceiver unit sends the first indication information to the radio frequency apparatus, the transceiver unit is further configured to receive third function information and third power consumption information from a second control apparatus, where the third function information indicates at least one third baseband processing function supported by the second control apparatus, the third power consumption information indicates power consumption of implementing each of the at least one third baseband processing function by the second control apparatus, and the first indication information is determined based on the first function information, the first power consumption information, the second function information, the second power consumption information, the third function information, and the third power consumption information.

With reference to the third aspect, in some implementations of the third aspect, the first function information includes first working mode information, the first working mode information indicates at least one first working mode supported by the radio frequency apparatus, the first working mode is a working mode used when the radio frequency apparatus performs one or more of the at least one baseband processing function, the first indication information further indicates a first target working mode, and the first target working mode is for performing the first target baseband processing function.

With reference to the third aspect, in some implementations of the third aspect, the first function information further includes at least one of the following information: a quantity of users that is supported when the radio frequency apparatus performs each first baseband processing function, a quantity of data streams or service streams that is supported when the radio frequency apparatus performs each first baseband processing function, or a quantity of resource blocks that is supported when the radio frequency apparatus performs each first baseband processing function.

According to a fourth aspect, a baseband processing apparatus is provided. The apparatus includes a transceiver unit and a processing unit. The transceiver unit is configured to send first function information and first power consumption information to a first apparatus, where the first function information indicates at least one first baseband processing function supported by a radio frequency apparatus, and the first power consumption information indicates power consumption of implementing each of the at least one first baseband processing function by the radio frequency apparatus. The transceiver unit is further configured to receive first indication information from the first apparatus, where the first indication information indicates a first target baseband processing function, the first target baseband processing function includes one or more of the at least one first baseband processing function, the first indication information is determined based on the first function information, the first power consumption information, second function information, and second power consumption information, the second function information indicates at least one second baseband processing function supported by a first control apparatus, and the second power consumption information indicates power consumption of implementing each of the at least one second baseband processing function by the first control apparatus. The first target baseband processing function is the first M required baseband processing functions or the last K required baseband processing functions in N required baseband processing functions, N, M, and K are positive integers, M ≤ N, K ≤ N, and the N required baseband processing functions are baseband processing functions that are sequentially performed by the radio frequency apparatus and the first control apparatus during processing of a baseband signal. The processing unit is configured to process the baseband signal based on the first indication information.

Therefore, in this application, the radio frequency apparatus may report, to the first apparatus, a baseband processing function supported by the radio frequency apparatus and power consumption corresponding to the baseband processing function. The first apparatus may comprehensively consider a capability and power consumption of each apparatus as required, and may select a manner with low system power consumption to indicate the radio frequency apparatus to indicate to perform the baseband processing function, to reduce system power consumption.

With reference to the fourth aspect, in some implementations of the fourth aspect, the first function information includes bandwidth information, the bandwidth information indicates a bandwidth supported by the radio frequency apparatus, and the bandwidth is greater than or equal to a first value.

With reference to the fourth aspect, in some implementations of the fourth aspect, the first function information includes first working mode information, the first working mode information indicates at least one first working mode supported by the radio frequency apparatus, the first working mode is a working mode used when the radio frequency apparatus performs one or more of the at least one baseband processing function, the first indication information further indicates a first target working mode, and the first target working mode is for performing the first target baseband processing function.

With reference to the fourth aspect, in some implementations of the fourth aspect, the first function information further includes at least one of the following information: a quantity of users that is supported when the radio frequency apparatus performs each first baseband processing function, a quantity of data streams or service streams that is supported when the radio frequency apparatus performs each first baseband processing function, or a quantity of resource blocks that is supported when the radio frequency apparatus performs each first baseband processing function.

According to a fifth aspect, a communication apparatus is provided. The apparatus may include a processing unit, a sending unit, and a receiving unit. Optionally, the sending unit and the receiving unit may alternatively be a transceiver unit.

When the apparatus is a first apparatus, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, to enable the apparatus to perform any method in the first aspect. When the apparatus is a chip in the first apparatus, the processing unit may be a processor, and the sending unit and the receiving unit may be an input/output interface, a pin, a circuit, or the like. The processing unit executes instructions stored in a storage unit, to enable the chip to perform any method in the first aspect. The storage unit is configured to store the instructions. The storage unit may be a storage unit (for example, a register or a cache) in the chip, or may be a storage unit located outside the chip in the apparatus (for example, a read-only memory or a random access memory).

When the apparatus is a radio frequency apparatus, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, to enable the apparatus to perform any method in the second aspect. When the apparatus is a chip in the radio frequency apparatus, the processing unit may be a processor, and the sending unit and the receiving unit may be an input/output interface, a pin, a circuit, or the like. The processing unit executes instructions stored in a storage unit, to enable the chip to perform any method in the second aspect. The storage unit is configured to store the instructions. The storage unit may be a storage unit (for example, a register or a cache) in the chip, or may be a storage unit located outside the chip in the apparatus (for example, a read-only memory or a random access memory).

According to a sixth aspect, this application provides an apparatus, including a processor. The processor is coupled to a memory, and may be configured to execute instructions in the memory, to implement the method in any one of the first aspect or the possible implementations of the first aspect, or implement the method in any one of the second aspect or the possible implementations of the second aspect. The apparatus further includes the memory. The apparatus further includes a communication interface, and the processor is coupled to the communication interface.

In an implementation, the apparatus is a first apparatus. When the apparatus is the first apparatus, the communication interface may be a transceiver or an input/output interface.

In another implementation, the apparatus is a chip or a chip system disposed in a first apparatus. When the apparatus is the chip or the chip system disposed in the first apparatus, the communication interface may be an input/output interface.

In an implementation, the apparatus is a radio frequency apparatus. When the apparatus is the radio frequency apparatus, the communication interface may be a transceiver or an input/output interface.

In another implementation, the apparatus is a chip or a chip system disposed in a radio frequency apparatus. When the apparatus is the chip or the chip system disposed in the radio frequency apparatus, the communication interface may be an input/output interface.

The transceiver may be a transceiver circuit. The input/output interface may be an input/output circuit.

According to a seventh aspect, a computer-readable storage medium is provided. The computer-readable storage medium stores a computer program or instructions. When the computer program or the instructions are executed, the method in any possible implementation of the first aspect or the second aspect is implemented.

According to an eighth aspect, a computer program product including instructions is provided. When the instructions are run, the method in any possible implementation of the first aspect or the second aspect is implemented.

According to a ninth aspect, a computer program is provided. The computer program includes code or instructions. When the code or the instructions are run, the method in any possible implementation of the first aspect or the second aspect is implemented.

According to a tenth aspect, a chip system is provided. The chip system includes a processor, may further include a memory, and is configured to implement the method in any possible implementation described in the first aspect or the second aspect. The chip system may include a chip, or may include a chip and another discrete component.

According to an eleventh aspect, a communication system is provided. The system includes the apparatus in any possible implementation of the third aspect or the fourth aspect.

### BRIEF DESCRIPTION OF DRAWINGS

FIG. 1 is a diagram of a structure of a communication system to which an embodiment of this application is applicable;
FIG. 2 is a diagram of a structure of a system with a plurality of architectures to which an embodiment of this application is applicable;
FIG. 3 is a schematic flowchart of baseband processing to which an embodiment of this application is applicable;
FIG. 4 is a schematic flowchart of a baseband processing method according to an embodiment of this application; and
FIG. 5 and FIG. 6 are diagrams of structures of possible apparatuses according to embodiments of this application.

### DESCRIPTION OF EMBODIMENTS

The following describes technical solutions in this application with reference to the accompanying drawings.

The technical solutions in embodiments of this application may be applied to various communication systems, for example, a long term evolution (long term evolution, LTE) system, a frequency division duplex (frequency division duplex, FDD) system, a time division duplex (time division duplex, TDD) system, a 5th generation (5th generation, 5G) or new radio (new radio, NR) system, and a 6th generation (6th generation, 6G) system or a future communication system. The 5G mobile communication system described in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine-to-machine (machine-to-machine, M2M) communication system, an internet of things (internet of things, IoT) communication system, a vehicle-to-everything (vehicle-to-everything, V2X) communication system, an uncrewed aerial vehicle (uncrewed aerial vehicle, UAV) communication system, or another communication system.

In addition, a network architecture and a service scenario described in embodiments of this application are intended to describe the technical solutions in embodiments of this application more clearly, and do not constitute any limitation on the technical solutions provided in embodiments of this application. A person of ordinary skill in the art may know that with the evolution of the network architecture and the emergence of new service scenarios, the technical solutions provided in embodiments of this application are also applicable to similar technical problems.

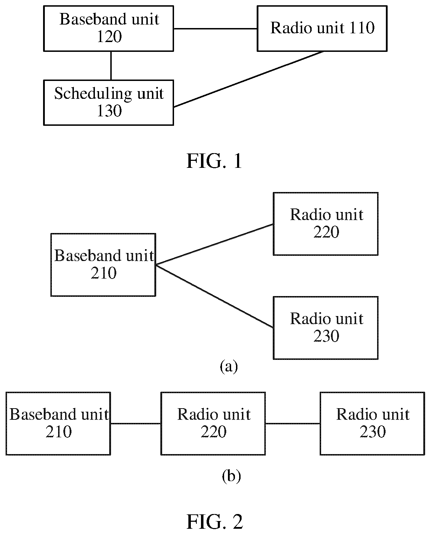

For ease of understanding of embodiments of this application, an application scenario of embodiments of this application is first described in detail with reference to FIG. 1.

FIG. 1 is a diagram of a structure of a communication system to which an embodiment of this application is applicable. An apparatus that may be involved in the communication system is first described.

Radio unit (radio unit, RU) 110: The radio unit 110 may implement functions such as intermediate frequency processing, radio frequency processing, and duplexing of a signal. For example, the radio unit 110 may be a remote radio unit (remote radio unit, RRU), an active antenna unit (active antenna unit, AAU), or another network element or communication apparatus that has a capability of intermediate frequency signal processing, radio frequency signal processing, or intermediate radio frequency signal processing.

Baseband unit (baseband unit, BU) 120: The baseband unit 120 may implement a function of processing a baseband signal. For example, the baseband unit 120 may include at least one of a central unit (central unit, CU) and a distributed unit (distributed unit, DU), or another network element or communication apparatus that has a capability of baseband signal processing. For example, the baseband unit may also be referred to as a BBU for short.

A communication interface between the baseband unit 120 and the radio unit 110 may be a fronthaul interface. For example, the interface may be a common public radio interface (common public radio interface, CPRI), an enhanced common public radio interface (enhanced CPRI, eCPRI), or another interface defined in the future for connecting the baseband unit 120 and the radio unit 110.

Scheduling unit 130: The scheduling unit 130 may schedule baseband processing functions of the baseband unit 120 and the radio unit 110. For example, the scheduling unit 130 may schedule, based on a service requirement, a baseband processing function or baseband processing functions to be performed by the baseband unit 120 and a baseband processing function or baseband processing functions to be performed by the radio unit 110.

The scheduling unit 130 and the baseband unit 120 may be integrally deployed, or the scheduling unit 130 and the radio unit 110 may be integrally deployed, or the scheduling unit 130, the radio unit 110, and the baseband unit 120 may be separately deployed. For example, when the scheduling unit 130 and the baseband unit 120 are integrally deployed, the scheduling unit 130 may communicate with the baseband unit 120 through an internal interface, or may communicate with the radio unit 110 through an interface. When the scheduling unit 130 and the radio unit 110 are integrally deployed, the scheduling unit 130 may communicate with the radio unit 110 through an internal interface, or may communicate with the baseband unit 120 through an interface. When the scheduling unit 130, the radio unit 110, and the baseband unit 120 are separately deployed, the scheduling unit 130 may communicate with the baseband unit 120 through an interface with the baseband unit 120, and communicate with the radio unit 110 through an interface with the radio unit 110; or the scheduling unit 130 may directly communicate with the baseband unit 120, and communicate with the radio unit 110 through the baseband unit 120. This is not particularly limited in this application.

A distributed base station may include at least one baseband unit and at least one radio unit. The following describes, with reference to FIG. 2, a system with a plurality of architectures to which the baseband unit and the radio unit are applicable.

FIG. 2 is a diagram of a structure of a system with a plurality of architectures to which an embodiment of this application is applicable. An example in which the system includes two radio units is used for description. The system includes a baseband unit 210, a radio unit 220, and a radio unit 230. The baseband unit 210 may be the baseband unit 120 in FIG. 1, and the radio unit 220 and the radio unit 230 may each be the radio unit 110 in FIG. 1. In this application, an example in which the system includes a direct connection system and a cascaded system is used for description. For the direct connection system, refer to (a) in FIG. 2. The baseband unit 210 is separately and directly connected to the radio unit 220 and the radio unit 230. The baseband unit 210 separately performs direct communication through an interface of the radio unit 220 and an interface of the radio unit 230. For the cascaded system, refer to (b) in FIG. 2. The baseband unit 210 is directly connected to the radio unit 220. The radio unit 220 is directly connected to the radio unit 230. The baseband unit 210 directly communicates with the radio unit 220. The baseband unit 210 may communicate with the radio unit 230 through the radio unit 220.

The foregoing merely describes the system with several architectures to which this embodiment of this application is applicable. Embodiments of this application are alternatively applicable to another system with an architecture in which a radio unit may communicate with a baseband unit. This is not particularly limited in this application.

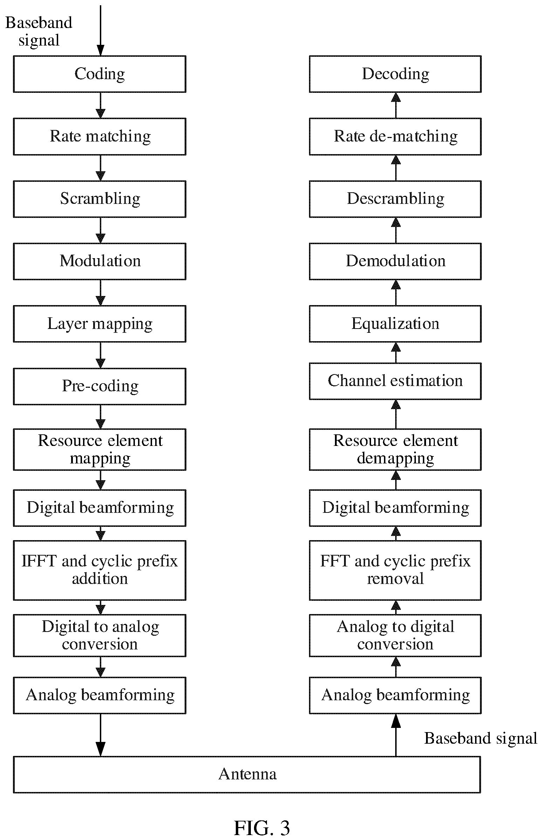

FIG. 3 is a schematic flowchart of baseband signal processing to which an embodiment of this application is applicable.

Refer to FIG. 3. In a downlink direction, a baseband signal may be processed in the following sequence: encoding (coding), rate matching (rate matching), scrambling (scrambling), modulation (modulation), layer mapping (layer mapping), pre-coding (pre-coding), resource element mapping (resource element mapping), digital beamforming (digital beamforming), inverse fast Fourier transformation (inverse fast Fourier transformation, IFFT), cyclic prefix addition (cyclic prefix addition), analog beamforming (analog beamforming), and digital to analog conversion (digital to analog conversion). Correspondingly, in an uplink direction, the baseband signal is processed in the following sequence: analog beamforming (analog beamforming), analog to digital conversion (analog to digital conversion), fast Fourier transformation (fast Fourier transformation, FFT), cyclic prefix removal (cyclic prefix removal), digital beamforming (digital beamforming), resource element demapping (resource element demapping), channel estimation (channel estimation), equalization (equalization), demodulation (demodulation), descrambling (descrambling), rate de-matching (rate de-matching), and decoding (decoding).

It should be noted that, in this embodiment of this application, a baseband processing function may be any one of the foregoing processing functions, or the baseband processing function may be a combination function of the foregoing plurality of processing functions. For example, FFT and cyclic prefix removal may be considered as one baseband processing function. The foregoing baseband processing function may be performed by a baseband unit, or may be performed by a radio unit. For example, in the downlink direction, the baseband unit sequentially performs processing of encoding, rate matching, scrambling, modulation, layer mapping, pre-coding, and resource element mapping on a baseband signal, and then the radio unit sequentially performs processing of digital beamforming, IFFT, cyclic prefix addition, analog beamforming, and digital to analog conversion on a signal processed by the baseband unit. In addition, the baseband unit and the radio unit may have a capability of performing a same baseband processing function. The baseband processing functions shown in FIG. 3 are used as an example, and this embodiment of this application is alternatively applicable to another procedure or a procedure of a baseband processing function defined in the future.

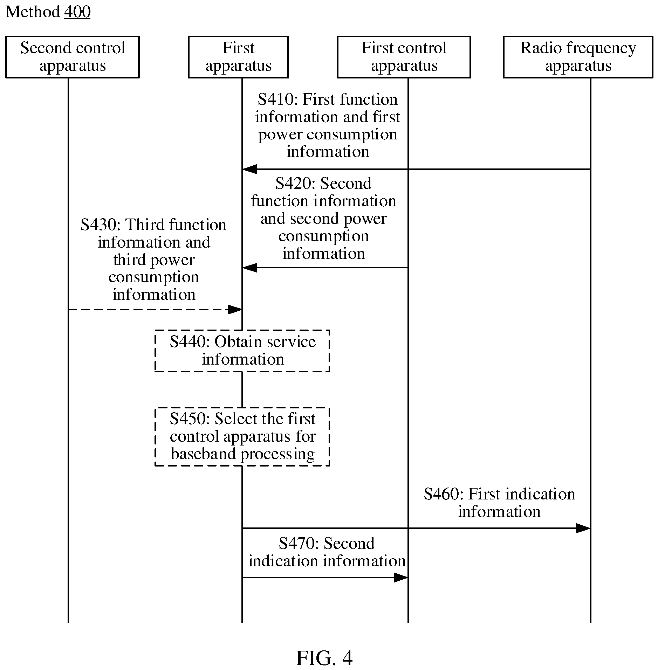

FIG. 4 is a schematic flowchart of a method 400 according to an embodiment of this application.

In the following embodiment, a radio frequency apparatus may be the radio unit 110 in FIG. 1, a first control apparatus may be the baseband unit 120 in FIG. 1, and a first apparatus may be the scheduling unit 130 in FIG. 1. When the first apparatus, the first control apparatus, and the radio frequency apparatus are separately disposed, the first apparatus, the first control apparatus, and the radio frequency apparatus may perform information transmission through an external interface. The following uses a case in which the first apparatus, the first control apparatus, and the radio frequency apparatus are separately disposed as an example for description. The method may include the following steps.

S410: The radio frequency apparatus sends first function information and first power consumption information to the first apparatus.

Correspondingly, the first apparatus receives the first function information and the first power consumption information from the radio frequency apparatus.

The first function information indicates at least one first baseband processing function supported by the radio frequency apparatus. The at least one first baseband processing function may include one or more of the baseband processing functions shown in FIG. 3.

In a possible implementation, the first function information includes an identifier of the at least one first baseband processing function supported by the radio frequency apparatus. The identifier of the at least one first baseband processing function identifies the at least one first baseband processing function. The first apparatus may learn of, based on the identifier of the first baseband processing function, a baseband processing function supported by the radio frequency apparatus.

In another possible implementation, the first function information includes working mode information. The working mode information indicates at least one first working mode supported by the radio frequency apparatus. The first working mode is a working mode used when the radio frequency apparatus performs one or more of the at least one first baseband processing function. For example, the first function information includes an identifier of the at least one first working mode: first working mode #1 (for example, performing digital to analog conversion and analog beamforming), first working mode #2 (for example, performing analog beamforming), and first working mode #3 (for example, performing no baseband processing function).

Specifically, the first apparatus may preset a mapping relationship between the identifier of the first working mode and an identifier of the baseband processing function. An identifier of one working mode may correspond to identifiers of some or all of first baseband processing functions. For example, if the first working mode is a working mode used when the radio frequency apparatus performs digital to analog conversion and analog beamforming, the mapping relationship includes correspondences between the identifier of the first working mode and an identifier of the digital to analog conversion and an identifier of the analog beamforming, so that the first apparatus can determine, based on the identifier of the first working mode and the mapping relationship, the baseband processing function supported by the radio frequency apparatus.

Optionally, the first function information may further include processing capability information corresponding to each first baseband processing function. For example, the first function information further includes at least one of the following information: a quantity of users that is supported when the radio frequency apparatus performs each first baseband processing function, a quantity of data streams or service streams that is supported when the radio frequency apparatus performs each first baseband processing function, and a quantity of resource blocks that is supported when the radio frequency apparatus performs each first baseband processing function.

The quantity of users that is supported when the radio frequency apparatus performs the baseband processing function may be a maximum value of a quantity of users that can be scheduled when the radio frequency apparatus performs the baseband processing function. The quantity of data streams or service streams that is supported when the radio frequency apparatus performs the baseband processing function may be a maximum value of the quantity of data streams or service streams that is supported when the radio frequency apparatus performs the baseband processing function. The quantity of resource blocks that is supported when the radio frequency apparatus performs the baseband processing function may be a maximum value of a quantity of resource blocks (resource blocks, RBs) that can be scheduled when the radio frequency apparatus performs the baseband processing function. The first apparatus allocates the baseband processing function based on function information, so that the baseband processing function allocated to the radio frequency apparatus is a baseband processing function within a capability range of the radio frequency apparatus, to further improve reliability of system baseband processing.

Optionally, the first function information further includes bandwidth information, and the bandwidth information indicates a bandwidth supported by the radio frequency apparatus.

The bandwidth may be a bandwidth of an interface between the radio frequency apparatus and the first control apparatus.

For example, the first function information may include a bandwidth value. Alternatively, the first function information may include a parameter value such as a rate or a throughput of the interface, so that the first apparatus can learn of, based on the parameter value, the bandwidth supported by the radio frequency apparatus, to enable the first apparatus to determine that the radio frequency apparatus can meet a bandwidth requirement, so as to improve reliability of system baseband processing.

The first power consumption information indicates power consumption of implementing each of the at least one first baseband processing function by the radio frequency apparatus.

The first power consumption information may include a power consumption value of implementing each first baseband processing function by the radio frequency apparatus. For example, a power consumption value of performing digital to analog conversion by the radio frequency apparatus is 10 watts (watts, W), and a power consumption value of performing analog beamforming is 20 W.

Alternatively, the first power consumption information may include a power consumption level of implementing each first baseband processing function by the radio frequency apparatus. For example, a power consumption level of performing digital to analog conversion by the radio frequency apparatus is a first power consumption level, and a power consumption level of performing analog beamforming is a second power consumption level. For example, power consumption corresponding to the first power consumption level is the highest in power consumption of performing a plurality of first baseband processing functions during processing of a baseband signal. Similarly, the second power consumption level is the lowest in the power consumption of performing the plurality of first baseband processing functions. The power consumption level may be classified by the radio frequency apparatus based on a predetermined algorithm and based on the power consumption value.

Correspondingly, if the first function information includes the working mode information, the first apparatus may determine, based on the working mode information, power consumption corresponding to the first working mode.

For example, the power consumption corresponding to the first working mode is a sum of power consumption corresponding to the first baseband processing function performed in the first working mode. The first apparatus determines, based on the identifier of the first working mode, a first baseband processing function or first baseband processing functions performed in the first working mode, to determine the power consumption corresponding to the first working mode.

The first power consumption information may include the power consumption value of implementing each first baseband processing function by the radio frequency apparatus, so that the first apparatus can obtain, based on the power consumption value corresponding to the baseband processing function, the power consumption corresponding to the first working mode.

Alternatively, the first power consumption information may include a power consumption value of implementing each first working mode by the radio frequency apparatus. For example, power consumption corresponding to the first working mode #1 is 30 W, power consumption corresponding to the first working mode #2 is 20 W, and power consumption corresponding to the first working mode #3 is 0 W.

Alternatively, the first power consumption information includes a power consumption level of implementing each first working mode by the radio frequency apparatus or other information that can indicate the power consumption corresponding to the first working mode. This is not particularly limited in this application.

S420: The first control apparatus sends second function information and second power consumption information to the first apparatus.

Correspondingly, the first apparatus receives the second function information and the second power consumption information from the first control apparatus.

The second function information indicates at least one second baseband processing function supported by the first control apparatus.

The second power consumption information indicates power consumption of implementing each of the at least one second baseband processing function by the first control apparatus.

The second function information indicates the at least one second baseband processing function supported by the first control apparatus. The at least one second baseband processing function may include one or more of the baseband processing functions shown in FIG. 3.

In a possible implementation, the second function information includes an identifier of the at least one second baseband processing function supported by the first control apparatus. The identifier of the at least one second baseband processing function identifies the at least one second baseband processing function. The first apparatus may learn of, based on the identifier of the second baseband processing function, a baseband processing function supported by the first control apparatus.

In another possible implementation, the second function information includes working mode information. The working mode information indicates at least one second working mode supported by the first control apparatus. The second working mode is a working mode used when a second control apparatus performs one or more of the at least one second baseband processing function.

Optionally, the first function information may further include processing capability information corresponding to each second baseband processing function. For example, the second function information further includes at least one of the following information: a quantity of users that is supported when the first control apparatus performs each second baseband processing function, a quantity of data streams or service streams that is supported when the first control apparatus performs each second baseband processing function, and a quantity of resource blocks that is supported when the first control apparatus performs each second baseband processing function.

Indication manners of the second function information and the second power consumption information may be similar to those in the descriptions about the first function information and the first power consumption information in step S410. For brevity, details are not described herein again.

In a possible implementation, the first apparatus may be connected to a plurality of control apparatuses. For example, the first apparatus is separately connected to the first control apparatus and the second control apparatus. The first apparatus may select a control apparatus from the plurality of control apparatuses, to perform baseband processing. In this case, the method 400 may further include step S430.

Optionally, in S430, the second control apparatus sends third function information and third power consumption information to the first apparatus. Correspondingly, the first apparatus receives the third function information and the third power consumption information from the second control apparatus.

The third function information indicates at least one third baseband processing function supported by the second control apparatus. The third power consumption information indicates power consumption of implementing each of the at least one third baseband processing function by the second control apparatus.

Descriptions about the third function information and the third power consumption information are similar to the descriptions about the first function information and the first power consumption information in step S410. For brevity, details are not described herein again.

It should be noted that the radio frequency apparatus, the first control apparatus, and the second control apparatus may support a same baseband processing function. For example, the radio frequency apparatus, the first control apparatus, and the second control apparatus may all support the analog beamforming. However, corresponding power consumption of performing the same baseband processing function by the radio frequency apparatus, the first control apparatus, and the second control apparatus may be different. For example, power consumption of performing analog beamforming by the radio frequency apparatus to process data is 20 W, power consumption of performing analog beamforming by the first control apparatus to process the same data is 30 W, and power consumption of performing analog beamforming by the second control apparatus to process the same data is 40 W.

N required baseband processing functions may be baseband processing functions that are sequentially performed by the radio frequency apparatus and the control apparatus (the first control apparatus or the second control apparatus) during processing of a baseband signal. The baseband processing functions shown in FIG. 3 may be an example of the N required baseband processing functions. The first apparatus may learn of the required baseband processing function based on pre-configured information, or the first apparatus may learn of the required baseband processing function by dynamically obtaining service information. In this case, step S440 may be further performed in the method 400.

Optionally, in S440, the first apparatus obtains the service information.

For example, the first control apparatus may predict future service load, to generate the service information, and send the service information to the first apparatus. The first apparatus may determine, based on the service information, the N required baseband processing functions that are sequentially performed for processing a service, so that the first apparatus may allocate the N required baseband processing functions to the radio frequency apparatus and the control apparatus (the first control apparatus or the second control apparatus) for processing.

Optionally, the service information may further include requirement information corresponding to one or more specific required baseband processing functions performed by the radio frequency apparatus, and/or requirement information corresponding to one or more specific required baseband processing functions performed by the control apparatus. For example, the requirement information indicates at least one of the following information: a requirement on a quantity of users when the radio frequency apparatus performs the one or more specific required baseband processing functions, a requirement on a quantity of streams when the radio frequency apparatus performs the one or more specific required baseband processing functions, or a requirement on a quantity of resource blocks when the radio frequency apparatus performs the one or more specific required baseband processing functions. In this way, the first apparatus may determine, based on the requirement information and the processing capability information of the radio frequency apparatus, whether the requirement indicated by the requirement information can be met when the radio frequency apparatus performs the one or more specific required baseband processing functions.

It may be understood that the step may be performed after step S410 to step S430, or may be performed synchronously with step S410 to step S430. This is not limited in this application.

When the first apparatus further receives the third function information and the third power consumption information from the second control apparatus, step S450 may be further performed in the method 400.

Optionally, in S450, the first apparatus selects the first control apparatus to process the baseband signal.

The first apparatus may determine, based on the second function information, the second power consumption information, the third function information, the third power consumption information, and the service information, to select the first control apparatus from the first control apparatus and the second control apparatus, to process the baseband signal. In other words, before determining a first target baseband processing function and a second target baseband processing function, the first apparatus may first compare performance of the first control apparatus with performance of the second control apparatus, and select the first control apparatus to process the baseband signal. The first control apparatus is a control apparatus with lower power consumption during processing, so that system power consumption can be further reduced.

Alternatively, the first apparatus may determine, based on the first function information, the first power consumption information, the second function information, the second power consumption information, the third function information, the third power consumption information, and the service information, to select the first control apparatus from the first control apparatus and the second control apparatus, to process the baseband signal. In other words, the first apparatus may allocate the baseband processing function by comprehensively considering the function information and the power consumption information of each apparatus, and select, through comparison, the first control apparatus to process the baseband signal. In all manners that meet the required baseband processing function, power consumption of a manner corresponding to processing by the first control apparatus is lower.

It should be noted that two control apparatuses are used as an example in this embodiment of this application. The solution in this application may alternatively be applied to a system including a plurality of control apparatuses and a plurality of radio frequency apparatuses. For brevity, details are not described herein again.

In addition, when the first apparatus selects the first control apparatus to process the baseband signal, a union set of the at least one first baseband processing function and the at least one second baseband processing function may include all of the N required baseband processing functions, where N is a positive integer.

S460: The first apparatus sends first indication information to the radio frequency apparatus.

Correspondingly, the radio frequency apparatus receives the first indication information from the first apparatus.

The first indication information indicates the first target baseband processing function.

For example, the first apparatus may determine the first indication information based on the first function information, the first power consumption information, the second function information, and the second power consumption information, and send the first indication information to the radio frequency apparatus.

The first target baseband processing function is the first M required baseband processing functions or the last K required baseband processing functions in the N consecutive required baseband processing functions. In addition, the first target baseband processing function includes one or more of the at least one first baseband processing function, M and K are positive integers, M ≤ N, and K ≤ N.

It should be noted that if the first function information includes the identifier of the first baseband processing function, the first indication information may include an identifier of the first target baseband processing function. Alternatively, if the first function information includes the identifier of the first working mode, the first indication information may include an identifier of a first target working mode.

S470: The first apparatus sends second indication information to the first control apparatus.

Correspondingly, the first control apparatus receives the second indication information from the first apparatus.

The second indication information indicates the second target baseband processing function.

The second target baseband processing function is a baseband processing function other than the first target baseband processing function in the N consecutive required baseband processing functions, and the second target baseband processing function includes one or more of the at least one second baseband processing function.

It should be noted that if the second function information includes the identifier of the second baseband processing function, the second indication information may include an identifier of the second target baseband processing function. If the second function information includes an identifier of the second working mode, the second indication information may include an identifier of a second target working mode.

It may be understood that the first target baseband processing function is the first M required baseband processing functions or the last K required baseband processing functions in the N consecutive required baseband processing functions, and is related to a required baseband processing function in an application scenario. The scenario shown in FIG. 3 is used as an example. In processing in the uplink direction, generally, the radio frequency apparatus first performs the first target baseband processing function, and then the second control apparatus performs the second target baseband processing function, where the first target baseband processing function is the first M required baseband processing functions in the N consecutive required baseband processing functions. In processing in the downlink direction, generally, the first control apparatus first performs the second target baseband processing function, and then the radio frequency apparatus performs the first target baseband processing function, where the first target baseband processing function is the last K required baseband processing functions in the N consecutive required baseband processing functions.

With reference to step S460 and step S470, for example, a manner in which the first apparatus determines the first target baseband processing function in the first indication information and the second target baseband processing function in the second indication information is described below.

The first apparatus may determine the first target baseband processing function and the second target baseband processing function based on the first function information, the first power consumption information, the second function information, and the second power consumption information.

In other words, a manner in which the radio frequency apparatus performs the first target baseband processing function and the first control apparatus performs the second target baseband processing function can meet a requirement of the required baseband processing function. In addition, the manner may be a manner with lower power consumption in manners that meet the requirement of the required baseband processing function.

This manner can meet the requirement of the required baseband processing function. First, a union set of the first target baseband processing function and the second target baseband processing function is the required baseband processing function. If the first function information further includes the processing capability information of the first baseband processing function, and the second function information further includes the processing capability information of the second baseband processing function, processing capabilities of the first target baseband processing function and the second target baseband processing function also need to meet a processing requirement of the required baseband processing function. In addition, if the first function information further includes the bandwidth information, the first apparatus may further determine that a bandwidth meets a bandwidth requirement. For example, the bandwidth information includes a bandwidth value supported by the radio frequency apparatus, and when the bandwidth value is greater than or equal to a first value, the bandwidth meets the bandwidth requirement. The first value is a bandwidth requirement value for processing the baseband signal by the radio frequency apparatus and the first control apparatus. The first value may be preset, or may be indicated to the first apparatus after being determined by the first control apparatus based on a service. It should be noted that if the bandwidth value supported by the radio frequency apparatus is less than the bandwidth requirement value, the bandwidth does not meet the bandwidth requirement, and the first apparatus may not determine the first target baseband processing function or the second target baseband processing function, and feed back, to the radio frequency apparatus, that the bandwidth supported by the radio frequency apparatus does not meet the bandwidth requirement. In this way, the radio frequency apparatus may generate, based on feedback information, an alarm indicating that the bandwidth is not supported.

For example, the following describes how the first apparatus determines the first target baseband processing function and the second target baseband processing function by using an example.

An example in which N = 5 is used. The N consecutive required baseband processing functions are a function #1, a function #2, a function #3, a function #4, and a function #5. Baseband processing functions supported by the radio frequency apparatus are the function #1, the function #2, and the function #3, and baseband processing functions supported by the first control apparatus are the function #2, the function #3, the function #4, and the function #5. In addition, processing capabilities of performing the function #1, the function #2, and the function #3 by the radio frequency apparatus meet a processing requirement of the required baseband processing function, and processing capabilities of performing the function #2, the function #3, the function #4, and the function #5 by the first control apparatus meet a processing requirement of the required baseband processing function. A bandwidth between the radio frequency apparatus and the first control apparatus also meets the bandwidth requirement.

For example, the following three manners can meet the required baseband processing function:

Manner 1: The first target baseband processing function includes the function #1, and the second target baseband processing function includes the function #2, the function #3, the function #4, and the function #5.

Manner 2: The first target baseband processing function includes the function #1 and the function #2, and the second target baseband processing function includes the function #3, the function #4, and the function #5.

Manner 3: The first target baseband processing function includes the function #1, the function #2, and the function #3, and the second target baseband processing function includes the function #4 and the function #5.

The first apparatus may randomly select one of the foregoing manners, or further, the first apparatus may determine, based on the first power consumption information and the second power consumption information, power consumption corresponding to the three manners, to determine a manner to be selected for processing. By way of example and not limitation, power consumption of the baseband processing functions supported by the radio frequency apparatus is as follows: The power consumption of the function #1 is 10 W, the power consumption of the function #2 is 40 W, and the power consumption of the function #3 is 10 W. Power consumption of the baseband processing functions supported by the first control apparatus is as follows: The power consumption of the function #2 is 10 W, the power consumption of the function #3 is 20 W, the power consumption of the function #4 is 20 W, and the power consumption of the function #5 is 10 W. It can be learned that the power consumption of the foregoing three manners (where the power consumption is a sum of power consumption of performing the baseband processing functions) is as follows: The power consumption corresponding to Manner 1 is 70 W, the power consumption corresponding to Manner 2 is 100 W, and the power consumption corresponding to Manner 3 is 90 W. Therefore, Manner 1 is a manner with minimum power consumption in the manners that meet the required baseband processing function, and the first apparatus may select Manner 1.

When the first function information and the second function information include the working mode information, that the first apparatus determines the first target baseband processing function and the second target baseband processing function may be understood as that the first apparatus determines the first target working mode and the second target working mode.

For example, the N consecutive required baseband processing functions are a function #1, a function #2, a function #3, a function #4, and a function #5. Working modes supported by the radio frequency apparatus are a mode #1 (for performing the function #1), a mode #2 (for performing the function #1 and the function #2), and a mode #3 (for performing the function #1, the function #2, and the function #3). Working modes supported by the first control apparatus are a mode #4 (for performing the function #2, the function #3, the function #4, and the function #5), a mode #5 (for performing the function #3, the function #4, and the function #5), a mode #6 (for performing the function #4 and the function #5), and a mode #7 (for performing the function #5).

The first apparatus may select three manners that can meet the required baseband processing function:
Manner 1: The first target working mode is the mode #1, and the second target working mode is the mode #4.
Manner 2: The first target working mode is the mode #2, and for the first control apparatus, the mode #5 is selected.
Manner 3: The first target working mode is the mode #3, and the second target working mode is the mode #6.

The first apparatus may randomly select one of the foregoing manners, or further, the first apparatus may determine, based on the first power consumption information and the second power consumption information, power consumption corresponding to the three manners, to determine a manner to be selected for baseband processing. In this case, power consumption information may include power consumption corresponding to each baseband processing function, or may be power consumption corresponding to each working mode. An example in which the power consumption information includes the power consumption corresponding to each working mode is used. Power consumption of the working modes supported by the radio frequency apparatus is as follows: The power consumption of the mode #1 is 10 W, the power consumption of the mode #2 is 50 W, and the power consumption of the mode #3 is 60 W. Power consumption of the working modes supported by the first control apparatus is as follows: The power consumption of the mode #4 is 60 W, the power consumption of the mode #5 is 50 W, the power consumption of the function #6 is 30 W, and the power consumption of the mode #7 is 10 W. It can be learned that the power consumption of the foregoing three manners (where the power consumption is a sum of power consumption of performing the working modes) is as follows: The power consumption corresponding to Manner 1 is 70 W, the power consumption corresponding to Manner 2 is 100 W, and the power consumption corresponding to Manner 3 is 90 W. Therefore, Manner 1 is a manner with minimum power consumption in the manners that meet the required baseband processing function, and the first apparatus may select Manner 1.

It should be additionally noted that when the first apparatus and the first control apparatus are integrated, the first control apparatus may communicate with the first apparatus through an internal interface. In this case, the foregoing step S420 and the foregoing step S470 may be optional operations. The first apparatus may obtain information (for example, second function information and the second power consumption information) from the first control apparatus through the internal interface, and the first control apparatus may also obtain information (for example, the second indication information) from the first apparatus through the internal interface. When the first apparatus and the radio frequency apparatus are integrated, the radio frequency apparatus may communicate with the first apparatus through an internal interface. In this case, the foregoing step S410 and the foregoing S460 are optional operations. The first apparatus may obtain information (for example, first function information and the first power consumption information) from the radio frequency apparatus through the internal interface, and the radio frequency apparatus may also obtain information (for example, the first indication information) from the first apparatus through the internal interface.

Therefore, in this application, the radio frequency apparatus may report, to the first apparatus, a baseband processing function supported by the radio frequency apparatus and power consumption corresponding to the baseband processing function. The first apparatus may comprehensively consider a capability and power consumption of each apparatus as required, and may select a manner with low system power consumption to indicate the radio frequency apparatus to perform the baseband processing function, to reduce system power consumption.

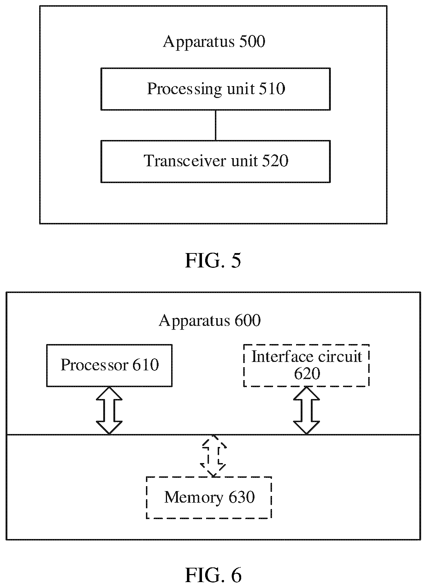

FIG. 5 and FIG. 6 are diagrams of structures of possible apparatuses according to embodiments of this application. These apparatuses may be configured to implement functions of the first apparatus and the radio frequency apparatus in the foregoing method embodiment, and therefore can also achieve beneficial effects of the foregoing method embodiments. In embodiments of this application, the apparatuses may be a first apparatus and a radio frequency apparatus, or may be modules (for example, chips) used in the first apparatus and the radio frequency apparatus.

As shown in FIG. 5, an apparatus 500 includes a processing unit 510 and a transceiver unit 520. The apparatus 500 is configured to implement the functions of the first apparatus or the radio frequency apparatus in the method embodiment shown in FIG. 4. Alternatively, the apparatus 500 may include a module configured to implement any function or operation of the first apparatus or the radio frequency apparatus in the method embodiment shown in FIG. 4. All or part of the module may be implemented by using software, hardware, firmware, or any combination thereof.

When the apparatus 500 is configured to implement the function of the first apparatus in the method embodiment shown in FIG. 4, the transceiver unit 520 is configured to receive first function information and first power consumption information from the radio frequency apparatus, where the first function information indicates at least one first baseband processing function supported by the radio frequency apparatus, and the first power consumption information indicates power consumption of implementing each of the at least one first baseband processing function by the radio frequency apparatus. The processing unit 510 is configured to generate first indication information, where the first indication information indicates a first target baseband processing function, the first target baseband processing function includes one or more of the at least one first baseband processing function, the first indication information is determined based on the first function information, the first power consumption information, second function information, and second power consumption information, the second function information indicates at least one second baseband processing function supported by a first control apparatus, and the second power consumption information indicates power consumption of implementing each of the at least one second baseband processing function by the first control apparatus. The transceiver unit 520 is further configured to send the first indication information to the radio frequency apparatus, where the first target baseband processing function is the first M required baseband processing functions or the last K required baseband processing functions in N required baseband processing functions, N, M, and K are positive integers, M ≤ N, K ≤ N, and the N required baseband processing functions are baseband processing functions that are sequentially performed by the radio frequency apparatus and the first control apparatus during processing of a baseband signal. The transceiver unit is further configured to send the first indication information to the radio frequency apparatus.

Therefore, in this application, the radio frequency apparatus may report, to the first apparatus, a baseband processing function supported by the radio frequency apparatus and power consumption corresponding to the baseband processing function. The first apparatus may comprehensively consider a capability and power consumption of each apparatus as required, and may select a manner with low system power consumption to indicate the radio frequency apparatus to indicate to perform the baseband processing function, to reduce system power consumption.

For more detailed descriptions about the processing unit 510 and the transceiver unit 520, refer directly to related descriptions in the method embodiment shown in FIG. 4. Details are not described herein again.

When the apparatus 500 is configured to implement the function of the radio frequency apparatus in the method embodiment shown in FIG. 4, the processing unit 510 is configured to generate first function information and first power consumption information, where the first function information indicates at least one first baseband processing function supported by the radio frequency apparatus, and the first power consumption information indicates power consumption of implementing each of the at least one first baseband processing function by the radio frequency apparatus. The transceiver unit 520 is configured to send the first function information and the first power consumption information to the first apparatus. The transceiver unit 520 is further configured to receive first indication information from the first apparatus, where the first indication information indicates a first target baseband processing function, the first target baseband processing function is one or more of the at least one first baseband processing function, the first indication information is determined based on the first function information, the first power consumption information, second function information, and second power consumption information, the second function information indicates at least one second baseband processing function supported by a first control apparatus, and the second power consumption information indicates power consumption of implementing each of the at least one second baseband processing function by the first control apparatus. The first target baseband processing function is the first M required baseband processing functions or the last K required baseband processing functions in N required baseband processing functions, N, M, and K are positive integers, M ≤ N, K ≤ N, and the N required baseband processing functions are baseband processing functions that are sequentially performed by the radio frequency apparatus and the first control apparatus during processing of a baseband signal. The transceiver unit is further configured to send the first indication information to the radio frequency apparatus.

Therefore, in this application, the radio frequency apparatus may report, to the first apparatus, a baseband processing function supported by the radio frequency apparatus and power consumption corresponding to the baseband processing function. The first apparatus may comprehensively consider a capability and power consumption of each apparatus as required, and may select a manner with low system power consumption to indicate the radio frequency apparatus to indicate to perform the baseband processing function, to reduce system power consumption.

For more detailed descriptions about the processing unit 510 and the transceiver unit 520, refer directly to related descriptions in the method embodiment shown in FIG. 4. Details are not described herein again.

As shown in FIG. 6, an apparatus 600 includes a processor 610, and optionally further includes an interface circuit 620. The processor 610 and the interface circuit 620 are coupled to each other. It may be understood that the interface circuit 620 may be a transceiver or an input/output interface. Optionally, the apparatus 600 may further include a memory 630 configured to store instructions executed by the processor 610, store input data needed by the processor 610 to run the instructions, or store data generated after the processor 610 runs the instructions.

When the apparatus 600 is configured to implement the function of the first apparatus in the method embodiment in FIG. 4, the processor 610 is configured to implement the function of the processing unit 510, and the interface circuit 620 is configured to implement the function of the transceiver unit 520.

When the apparatus 600 is configured to implement the function of the radio frequency apparatus in the method embodiment in FIG. 4, the processor 610 is configured to implement the function of the processing unit 610, and the interface circuit 620 is configured to implement the function of the transceiver unit 520.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, any conventional processor, or the like.

The memory in this embodiment of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to the processor, so that the processor can read information from the storage medium and write information into the storage medium. Certainly, the storage medium may alternatively be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

All or part of the foregoing embodiments may be implemented by using software, hardware, firmware, or any combination thereof. When software is used to implement the embodiments, all or part of the embodiments may be implemented in a form of a computer program product. The computer program product includes one or more computer programs or instructions. When the computer programs or instructions are loaded and executed on a computer, all or part of the procedures or functions in embodiments of this application are performed. The computer may be a general-purpose computer, a dedicated computer, a computer network, a network device, a terminal device, or another programmable apparatus. The computer program or the instructions may be stored in a computer-readable storage medium, or may be transmitted through the computer-readable storage medium. The computer-readable storage medium may be any usable medium accessible by a computer, or a data storage device, for example, a server, integrating one or more usable media. The usable medium may be a magnetic medium, for example, a floppy disk, a hard disk, or a magnetic tape, may be an optical medium, for example, a DVD, or may be a semiconductor medium, for example, a solid-state drive (solid-state drive, SSD).

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It should be understood that in embodiments of this application, numbers "first", "second", ... are merely used to distinguish between different objects, for example, to distinguish between different network devices, and constitute no limitation on the scope of embodiments of this application. Embodiments of this application are not limited thereto.

It should be further understood that in this application, "when" and "if" both indicate that corresponding processing is performed by a network element in an objective case, are not intended to limit time, do not require a determining action to be performed during implementation of the network element, and do not imply that there is any other limitation.

It should be further understood that in embodiments of this application, "B corresponding to A" indicates that B is associated with A, and B may be determined based on A. However, it should be further understood that determining B based on A does not mean that B is determined based only on A, and B may alternatively be determined based on A and/or other information.

It should also be understood that the term "and/or" in this specification describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

It should be further understood that, in embodiments of this application, "indication" may include a direct indication and an indirect indication, or may include an explicit indication and an implicit indication. Information indicated by a message (the first function information and the first power consumption information described below) is referred to as to-be-indicated information. In this case, in a specific implementation process, there are a plurality of manners of indicating the to-be-indicated information. For example, but not limited to, the to-be-indicated information such as the to-be-indicated information itself or an index of the to-be-indicated information may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated based on a pre-agreed arrangement sequence of each piece of information, so that indication overheads can be reduced to some extent.

Unless otherwise specified, in this application, an expression similar to that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may alternatively be obtained based on the foregoing rule.

It may be understood that various reference numerals in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A baseband processing method, wherein the method comprises:
receiving, by a first apparatus, first function information and first power consumption information from a radio frequency apparatus, wherein the first function information indicates at least one first baseband processing function supported by the radio frequency apparatus, and the first power consumption information indicates power consumption of implementing each of the at least one first baseband processing function by the radio frequency apparatus; and
sending, by the first apparatus, first indication information to the radio frequency apparatus, wherein the first indication information indicates a first target baseband processing function, the first target baseband processing function comprises one or more of the at least one first baseband processing function, the first indication information is determined based on the first function information, the first power consumption information, second function information, and second power consumption information, the second function information indicates at least one second baseband processing function supported by a first control apparatus, and the second power consumption information indicates power consumption of implementing each of the at least one second baseband processing function by the first control apparatus, wherein
the first target baseband processing function is the first M required baseband processing functions or the last K required baseband processing functions in N required baseband processing functions, N, M, and K are positive integers, M ≤ N, K ≤ N, and the N required baseband processing functions are baseband processing functions that are sequentially performed by the radio frequency apparatus and the first control apparatus during processing of a baseband signal.

2. The method according to claim 1, wherein the first function information comprises bandwidth information, the bandwidth information indicates a bandwidth supported by the radio frequency apparatus, and the bandwidth is greater than or equal to a first value.

3. The method according to claim 1 or 2, wherein the method further comprises:
receiving, by the first apparatus, the second function information and the second power consumption information from the first control apparatus; and
sending, by the first apparatus, second indication information to the first control apparatus, wherein the second indication information indicates a second target baseband processing function, the second target baseband processing function comprises one or more of the at least one second baseband processing function, and the second target baseband processing function is a baseband processing function other than the first target baseband processing function in the N required baseband processing functions.

4. The method according to claim 3, wherein the method further comprises:
sending, by the first control apparatus, the second function information and the second power consumption information to the first apparatus; and
receiving, by the first control apparatus, the second indication information from the first apparatus.

5. The method according to any one of claims 1 to 4, wherein before the sending, by the first apparatus, first indication information to the radio frequency apparatus, the method further comprises:
receiving, by the first apparatus, third function information and third power consumption information from a second control apparatus, wherein the third function information indicates at least one third baseband processing function supported by the second control apparatus, the third power consumption information indicates power consumption of each of the at least one third baseband processing function for the second control apparatus, and the first indication information is determined based on the first function information, the first power consumption information, the second function information, the second power consumption information, the third function information, and the third power consumption information.

6. The method according to claim 5, wherein the method further comprises:
sending, by the second control apparatus, the third function information and the third power consumption information to the first apparatus.

7. The method according to any one of claims 1 to 6, wherein the first function information comprises first working mode information, the first working mode information indicates at least one first working mode supported by the radio frequency apparatus, the first working mode is a working mode used when the radio frequency apparatus performs one or more of the at least one baseband processing function, the first indication information further indicates a first target working mode, and the first target working mode is for performing the first target baseband processing function.

8. The method according to any one of claims 1 to 7, wherein the first function information further comprises at least one of the following information: a quantity of users that is supported when the radio frequency apparatus performs each first baseband processing function, a quantity of data streams or service streams that is supported when the radio frequency apparatus performs each first baseband processing function, or a quantity of resource blocks that is supported when the radio frequency apparatus performs each first baseband processing function.

9. The method according to any one of claims 1 to 8, wherein the method further comprises:
sending, by the radio frequency apparatus, the first function information and the first power consumption information to the first apparatus; and
receiving, by the radio frequency apparatus, the first indication information from the first apparatus.

10. A baseband processing method, wherein the method comprises:
sending, by a radio frequency apparatus, first function information and first power consumption information to a first apparatus, wherein the first function information indicates at least one first baseband processing function supported by the radio frequency apparatus, and the first power consumption information indicates power consumption of implementing each of the at least one first baseband processing function by the radio frequency apparatus; and
receiving, by the radio frequency apparatus, first indication information from the first apparatus, wherein the first indication information indicates a first target baseband processing function, the first target baseband processing function comprises one or more of the at least one first baseband processing function, the first indication information is determined based on the first function information, the first power consumption information, second function information, and second power consumption information, the second function information indicates at least one second baseband processing function supported by a first control apparatus, and the second power consumption information indicates power consumption of implementing each of the at least one second baseband processing function by the first control apparatus, wherein the first target baseband processing function is the first M required baseband processing functions or the last K required baseband processing functions in N required baseband processing functions, N, M, and K are positive integers, M ≤ N, K ≤ N, and the N required baseband processing functions are baseband processing functions that are sequentially performed by the radio frequency apparatus and the first control apparatus during processing of a baseband signal.

11. The method according to claim 10, wherein the first function information comprises bandwidth information, the bandwidth information indicates a bandwidth supported by the radio frequency apparatus, and the bandwidth is greater than or equal to a first value.

12. The method according to claim 10 or 11, wherein the first function information comprises first working mode information, the first working mode information indicates at least one first working mode supported by the radio frequency apparatus, the first working mode is a working mode used when the radio frequency apparatus performs one or more of the at least one baseband processing function, the first indication information further indicates a first target working mode, and the first target working mode is for performing the first target baseband processing function.

13. The method according to any one of claims 10 to 12, wherein the first function information further comprises at least one of the following information: a quantity of users that is supported when the radio frequency apparatus performs each first baseband processing function, a quantity of data streams or service streams that is supported when the radio frequency apparatus performs each first baseband processing function, or a quantity of resource blocks that is supported when the radio frequency apparatus performs each first baseband processing function.

14. A baseband processing apparatus, wherein the apparatus comprises:
a transceiver unit, configured to receive first function information and first power consumption information from a radio frequency apparatus, wherein the first function information indicates at least one first baseband processing function supported by the radio frequency apparatus, and the first power consumption information indicates power consumption of implementing each of the at least one first baseband processing function by the radio frequency apparatus; and
a processing unit, configured to generate first indication information, wherein the first indication information indicates a first target baseband processing function, the first target baseband processing function comprises one or more of the at least one first baseband processing function, the first indication information is determined based on the first function information, the first power consumption information, second function information, and second power consumption information, the second function information indicates at least one second baseband processing function supported by a first control apparatus, and the second power consumption information indicates power consumption of implementing each of the at least one second baseband processing function by the first control apparatus, wherein the first target baseband processing function is the first M required baseband processing functions or the last K required baseband processing functions in N required baseband processing functions, N, M, and K are positive integers, M ≤ N, K ≤ N, and the N required baseband processing functions are baseband processing functions that are sequentially performed by the radio frequency apparatus and the first control apparatus during processing of a baseband signal, wherein
the transceiver unit is further configured to send the first indication information to the radio frequency apparatus.

15. The apparatus according to claim 14, wherein the first function information comprises bandwidth information, the bandwidth information indicates a bandwidth supported by the radio frequency apparatus, and the bandwidth is greater than or equal to a first value.

16. The apparatus according to claim 14 or 15, wherein
the transceiver unit is further configured to receive the second function information and the second power consumption information from the first control apparatus; and
the transceiver unit is further configured to send second indication information to the first control apparatus, wherein the second indication information indicates a second target baseband processing function, the second target baseband processing function comprises one or more of the at least one second baseband processing function, and the second target baseband processing function is a baseband processing function other than the first target baseband processing function in the N required baseband processing functions.

17. The apparatus according to claims 14 to 16, wherein before the transceiver unit sends the first indication information to the radio frequency apparatus,
the transceiver unit is further configured to receive third function information and third power consumption information from a second control apparatus, wherein the third function information indicates at least one third baseband processing function supported by the second control apparatus, the third power consumption information indicates power consumption of implementing each of the at least one third baseband processing function by the second control apparatus, and the first indication information is determined based on the first function information, the first power consumption information, the second function information, the second power consumption information, the third function information, and the third power consumption information.

18. The apparatus according to any one of claims 14 to 17, wherein the first function information comprises first working mode information, the first working mode information indicates at least one first working mode supported by the radio frequency apparatus, the first working mode is a working mode used when the radio frequency apparatus performs one or more of the at least one baseband processing function, the first indication information further indicates a first target working mode, and the first target working mode is for performing the first target baseband processing function.

19. The apparatus according to any one of claims 14 to 18, wherein the first function information further comprises at least one of the following information: a quantity of users that is supported when the radio frequency apparatus performs each first baseband processing function, a quantity of data streams or service streams that is supported when the radio frequency apparatus performs each first baseband processing function, or a quantity of resource blocks that is supported when the radio frequency apparatus performs each first baseband processing function.

20. A baseband processing apparatus, wherein the apparatus comprises:
a transceiver unit, configured to send first function information and first power consumption information to a first apparatus, wherein the first function information indicates at least one first baseband processing function supported by a radio frequency apparatus, and the first power consumption information indicates power consumption of implementing each of the at least one first baseband processing function by the radio frequency apparatus; and
the transceiver unit is further configured to receive first indication information from the first apparatus, wherein the first indication information indicates a first target baseband processing function, the first target baseband processing function comprises one or more of the at least one first baseband processing function, the first indication information is determined based on the first function information, the first power consumption information, second function information, and second power consumption information, the second function information indicates at least one second baseband processing function supported by a first control apparatus, and the second power consumption information indicates power consumption of implementing each of the at least one second baseband processing function by the first control apparatus, wherein the first target baseband processing function is the first M required baseband processing functions or the last K required baseband processing functions in N required baseband processing functions, N, M, and K are positive integers, M ≤ N, K ≤ N, and the N required baseband processing functions are baseband processing functions that are sequentially performed by the radio frequency apparatus and the first control apparatus during processing of a baseband signal; and
a processing unit, configured to process the baseband signal based on the first indication information.

21. The apparatus according to claim 20, wherein the first function information comprises bandwidth information, the bandwidth information indicates a bandwidth supported by the radio frequency apparatus, and the bandwidth is greater than or equal to a first value.

22. The apparatus according to claim 20 or 21, wherein the first function information comprises first working mode information, the first working mode information indicates at least one first working mode supported by the radio frequency apparatus, the first working mode is a working mode used when the radio frequency apparatus performs one or more of the at least one baseband processing function, the first indication information further indicates a first target working mode, and the first target working mode is for performing the first target baseband processing function.

23. The apparatus according to any one of claims 20 to 22, wherein the first function information further comprises at least one of the following information: a quantity of users that is supported when the radio frequency apparatus performs each first baseband processing function, a quantity of data streams or service streams that is supported when the radio frequency apparatus performs each first baseband processing function, or a quantity of resource blocks that is supported when the radio frequency apparatus performs each first baseband processing function.

24. A communication apparatus, comprising a processor, wherein the processor is coupled to a memory, the memory is configured to store a computer program or instructions, and the processor is configured to execute the computer program or the instructions to implement the method according to any one of claims 1 to 9 or the method according to any one of claims 10 to 13.

25. A baseband processing system, comprising: the apparatus according to any one of claims 14 to 19 and the apparatus according to any one of claims 20 to 23.

26. A computer program product, comprising instructions, wherein when the instructions are run on a computer, the computer is enabled to perform the method according to any one of claims 1 to 9, or the computer is enabled to perform the method according to any one of claims 10 to 13.

27. A computer-readable storage medium, comprising a computer program, wherein when the computer program is run on a computer, the computer is enabled to perform the method according to any one of claims 1 to 9, or the computer is enabled to perform the method according to any one of claims 10 to 13.

28. A chip, comprising one or more processing circuits, wherein the one or more processing circuits are configured to implement the method according to any one of claims 1 to 9 or implement the method according to any one of claims 10 to 13.
